# EUROPEAN PATENT APPLICATION

(11) **EP 1 473 791 A1**
(43) Date of publication of application: **03.11.2004**
(21) Application number: 04010016.6
(22) Date of filing: 27.04.2004
(51) Int. Cl.: H01M 8/04

(54) **Fuel cell power generator**

(30) Priority: 02.05.2003 JP 2003127266
(71) Applicant: MATSUSHITA ELECTRIC INDUSTRIAL CO., LTD., Kadoma-shi, Osaka 571-8501 (JP)
(72) Inventor: Gyoten, Hisaaki, Shijonawate-shi Osaka 575-0013 (JP); Tomizawa, Takeshi, Ikoma-shi Nara 630-0123 (JP); Kanbara, Teruhisa, Toyonaka-shi Osaka 560-0056 (JP)
(74) Representative: Schirdewahn, Jürgen, Dr.

(57) **Abstract**

The present invention is to realize a fuel cell power generator capable of maintaining the electroconductivity of cooling water at a low level for a long period of time, preventing the metal member contacting the cooling water from corroding, and functioning without causing any harm to power generation. In the fuel cell power generator comprising a fuel cell, a cooling water pipe, a heat exchanger and a means for circulating cooling water, the formation of a conductive network electrically connecting the fuel cell, the cooling water pipe, the heat exchanger and the means is prevented.

## Description

### BACKGROUND OF THE INVENTION

The present invention relates to a fuel cell power generator with the preventing cooling water of a fuel cell stack from degradation.

A polymer electrolyte fuel cell is expected to be available for consumer use including a home because it operates at around room temperature. The fuel cell not only generates power at its installation site, but also can be incorporated into a cogeneration system which utilizes waste heat.

The basic unit cell of a polymer electrolyte fuel cell is a membrane electrolyte assembly (MEA) composed of a hydrogen ion conductive polymer electrolyte membrane having a thickness of 30 to 100 µm and a pair of gas diffusion electrodes sandwiching the polymer electrolyte membrane.

The gas diffusion electrode is formed by applying, on a gas diffusion substrate, a mixture made of electrolyte resin having hydrogen ion conductivity like the polymer electrolyte membrane and carbon powder having particulate noble metal dispersed on the surface thereof which later serves as a catalyst for electrochemical reaction. The mixture constitutes a catalyst reaction layer. Electric power is generated by feeding a fuel gas and an oxidant gas into the gas diffusion electrodes.

In practice, the MEA is sandwiched between separators to produce a unit cell or single. A plurality of the unit cells are stacked to give a stack of unit cells. The stack of unit cells is placed between end plates, which is then clamped at both ends to give a fuel cell stack.

Between an end plate and a separator adjacent to the end plate is placed a current collector plate for efficiently collecting an electric current generated. The current collector plate and the end plate are insulated by an insulating material. The current collector plate is usually made of metal, and the end plate is also mostly made of metal because it is required to have mechanical strength.

The separator is required to have electron conductivity, airtightness and corrosion resistance, and thus is made of a material having the above properties. Usually, a carbonaceous material or a metal material is used.

Between an MEA and a separator is disposed a gas sealant such that the gas sealant encompasses the gas diffusion electrode in order to prevent the fuel and oxidant gases supplied from leaking outside and from mixing with each other.

On each of the MEAs, manifolds for supplying and removing the reactant gases are formed such that the manifolds run through the separators (internal manifold). In the fuel cell, the chemical energy of the reactant gases is partly converted into electricity and the remaining chemical energy is converted into heat inside the fuel cell stack.

In order to carry the heat generated inside the fuel cell stack to the outside for efficient use thereof and to maintain the temperature of the fuel cell stack constant by cooling the fuel cell stack, cooling water is circulated inside the stack. Manifolds for cooling water are also formed, similar to those for the reactant gases, such that the manifolds run through the separators. The cooling water having passed through the stack is usually expelled outside the fuel cell stack, enters a heat exchanger to remove its sensible heat and then is brought back to the stack for circulation.

Other than the manifold as described above which is so-called "internal manifold", there is another type of manifold called "external manifold", which is disposed at each of the sides of a fuel cell stack. External manifolds provide the reactant gases to each unit cell from the sides of the fuel cell stack.

There are also external manifolds for supplying and removing cooling water. Fluids such as reactant gases and cooling water are fed from the outside of the stack to the inside of the stack through pipes connected to the end plates and the current collector plates.

Usually, the end plates of the fuel cell stack are fixed to a fuel cell power generator. The fuel cell power generator includes, other than the fuel cell stack, a fuel processor for producing hydrogen from fossil fuel such as natural gas, humidifiers for humidifying the reactant gases to be supplied to the fuel cell stack, an inverter for converting generated direct current electricity into alternating current electricity, a heat exchanger for adjusting the temperature of the fuel cell stack, a hot-water storage tank for efficient use of generated heat and a controller for controlling the whole system. Each of the above elements constituting the fuel cell power generator is attached to the body or cabinet of the fuel cell power generator.

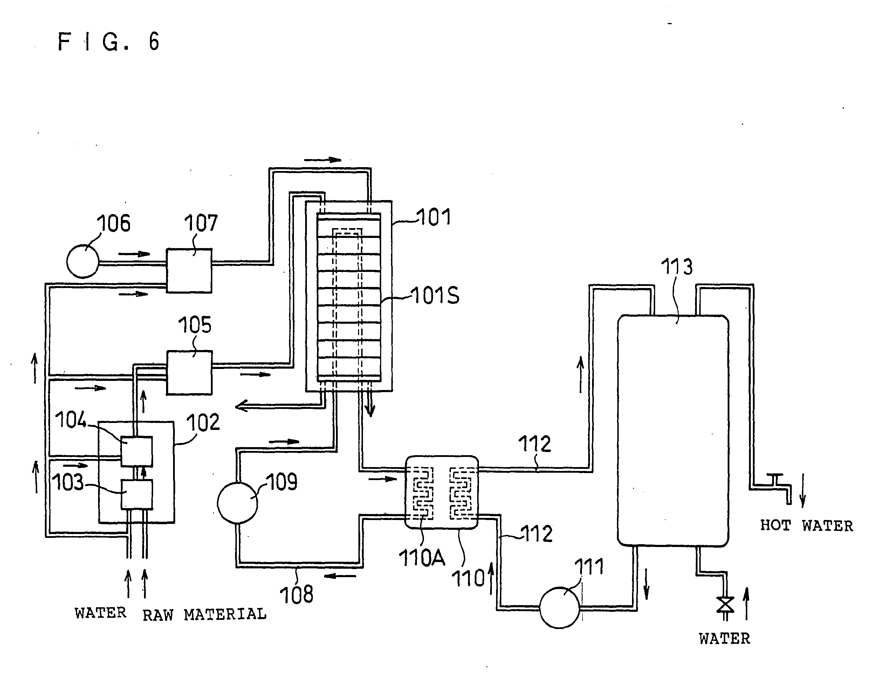

FIG. 6 shows a schematic diagram illustrating the structure of the above-described fuel cell power generator.

First, a fuel processor 102 produces a fuel gas composed mainly of hydrogen from raw material such as natural gas. The produced fuel gas is passed to a humidifier 105 and then to a fuel cell stack 101. The fuel processor 102 comprises: a reformer 103 for producing a reformed gas from raw material; and a carbon monoxide converter 104 for producing carbon dioxide and hydrogen through the reaction of carbon monoxide contained in the reformed gas with water.

An air supplier 106 supplies an oxidant gas, i.e. air, to the fuel cell stack 101 through another humidifier 107. A pump 109 supplies cooling water through an input section of a cooling water pipe 108 to the fuel cell stack 101 for cooling down a stack 101S within the stack 101. The supplied cooling water circulates throughout the stack 101S to reach the output section of the cooling water pipe 108. Between the fuel cell stack 101 and the pump 109 is arranged a heat exchanger 110 through which the cooling water pipe 108 runs. During power generation, in the heat exchanger 110, the heat of the cooling water having passed through the fuel cell stack 101 is transferred through a heat exchanging plate (here and in the following to be understood as well more general as a heat exchange means) in the heat exchanger 110 to cooling water pumped by a circulating pump 111, which is then transported through a heat removing pipe 112 to a storage tank 113.

In the fuel cell stack 101, cooling water circulates throughout the inside of the stack 101S to enhance cooling efficiency. The use of pure water having extremely low electroconductivity as cooling water, i.e. dielectric water, prevents relatively high voltage generated in the fuel cell stack to be transmitted to the cooling system through the cooling water.

In case of corrosion of the metals of the cooling system such as the cooling water pipe 108, the pump 109 and the heat exchanging plate 110A in the heat exchanger 110, etc, however, it takes place that metal elements leach into the cooling water making it electrically conductive so that the above mentioned relatively high voltage is transmitted partially at least to the cooling system.

Japanese Laid-Open Patent Publication No. 2000-297784 discloses a fuel cell power generator in which a material capable of absorbing and desorbing ions of cooling water upon application of an electric potential is disposed at a portion contacting the cooling water. This prevents the difference between the electric potential of the cooling water and that one of the contact portion with the cooling water from growing and ions originating from the material of the cooling system are prevented from leaching into the cooling water. Further, Japanese Laid-Open Patent Publication No. 2001-155761 discloses a technique in which an inlet of a fuel cell for cooling water and an outlet therefor are short-circuited and they are connected to a negative electrode of the fuel cell.

In the fuel cell power generators described above, an opening must be formed in the cooling system to supply cooling water. If an opening is formed in some part of the cooling system, however, impurities enter from the opening, leading to an increased electroconductivity of the water. The impurities causing the increase of electroconductivity of cooling water not only enter from the opening, but also occur within the fuel cell power generator. For example, the leaching of ions from the cooling water pipe and the separators causes an increased electroconductivity of the water.

Furthermore, the US 5 776 624A discloses specific metallurgical techniques including special choices of brazed connections between sandwiched metal plates composing bipolar separators of a fuel cell in which the cooling medium is flowing between the mentioned plates. The cooling medium is a dielectric fluid, i.e. an essentially not electrically conducting cooling medium. The purpose is to avoid corrosion by small amounts of metal leaching into the dielectric fluid so that finally the cooling medium does not maintain its dielectric character, i.e. that the specific path resistance of the cooling medium does not fall below about 200,000 Ohm x cm.

The US 2003/0203261A1 discloses to reduce bypass currents within a cooling fluid by coating inner walls of the cooling medium path, particularly in the entrance sections, by an insulating layer.

The EP 1078408B1 for the purpose of simple manufacturing to make selected walls of channels including guiding channels for cooling medium by a variation of electrically conducting and non conducting material.

The WO 00/63996A1 teaches to produce feeding tubes of a fluid including those for guidance of a cooling medium by insulating material, the feeding being pierced through a stack of plates forming part of a fuel cell or a stack of such fuel cells.

A metal portion of the cooling system contacting the cooling water has a certain electric potential relative to the cooling water. The electric potential of the cooling water has a gradient between a positive electrode (oxidant electrode) a negative electrode (fuel electrode) of the fuel cell stack. For this reason, if at least two metal portions contacting circulating cooling water are conducting an electric current when the electroconductivity of cooling water starts increasing, the surface of one of the metal portions will be noble and the metal will corrode to release positive ions. This further increases the conductivity of the cooling water, creating a negative spiral of accelerating the corrosion and the release of ions. Once such negative spiral occurs, not only the cooling system will be corroded, but also the fuel cell stack 101 will be gradually degraded.

As explained above, the electroconductivity of the cooling water abruptly changes. It is therefore necessary to provide a device for continuously monitoring the electroconductivity of the cooling water to track the electroconductivity. In addition, an ion absorbing material has its absorbing capability limit, and once the material is disposed, the replacement thereof will be difficult. This further requires an operation such as the application of a reverse electric potential to restore the material. Moreover, it is difficult to dispose the material on the heat exchanging plate of the heat exchanger, and short-circuiting the outlet and inlet of the heat exchanger will create another problem of the corrosion of the metal portion.

### BRIEF SUMMARY OF THE INVENTION

In order to solve the above problems, an object of the present invention is to provide a fuel cell power generator capable of preventing the corrosion of electrical conductive members such as a metal portion of a cooling system, suppressing the concentration of impurity ions in cooling water, and functioning without interference due to the impurity ions.

This object is attained by the features of claim 1. Advantageous developments of the invention are defined in the subclaims.

The term of claim 2 that said cooling medium is an essentially not electrically conducting cooling medium can be interpreted as well in the sense of the above mentioned US 5 776 624 A as dielectric medium, i.e. that the specific path resistance of the cooling medium does not fall below about 200,000 Ohm x cm.

Particularly the present invention provides a fuel cell power generator comprising: a fuel cell stack comprising a stack of unit cells, a pair of current collectors and a pair of end plates, each of the unit cells comprising a hydrogen ion conductive electrolyte, a pair of electrodes sandwiching the hydrogen ion conductive electrolyte and a pair of separators sandwiching the electrodes; a cooling medium (water) path (pipe) for circulating cooling medium which passes through the fuel cell stack; a heat exchanger having a heat removing path connected thereto and a heat exchanging plate for recovering heat from the cooling medium having passed through the fuel cell stack; and a means for circulating the cooling medium (e.g. a pump). In accordance with the invention electrically insulating means are settled between at least two electrical conductive members, which have a contact with said cooling medium, selected from the group consisting of an electrical conductive portion of said fuel cell stack, an electrical conductive portion of said cooling medium path, an electrical conductive portion of said heat exchanger, and an electrical conductive portion of said means for circulating said cooling medium.

At least two electrical conductive portions contacting the cooling medium selected from the group consisting of an electrical conductive portion of the fuel cell stack, an electrical conductive portion of the cooling medium path, an electrical conductive portion of the heat exchanger, and an electrical conductive portion of the means for circulating the cooling medium are electrically insulated.

The last mentioned combination of features is one subject of claim 3. Preferably pairs of elements of different elements of the group of elements are to be electrically isolated.

The US 2002/0192521 A1 discloses to make not only inlet and outlet for the cooling medium of a fuel cell stack but also at least portions of inlet and outlet pipes out of insulating material in order to maintain dielectric character of the cooling medium without pollution.

The WO 01/28016 already discloses to install a heat exchanger with a secondary fluid for cooling a cooling medium in one loop and a means for a collecting the cooling medium in another loop. This arrangement is however not capable of protecting the heat exchanging means of the heat exchanger, like a plate for instance, from corrosion by migration of corroding ions within the flowing cooling medium.

The electrical conductive member of the fuel cell stack comprises the separators, the current collectors and the end plates, and the electrical conductive member of the heat exchanger comprises the heat exchanging plate.

However, if the inlet and the outlet for cooling water in the heat exchanging plate of the heat exchanger are connected and made of the same metal, for example, the difference in electric potential between cooling water passing through the inlet and cooling water passing through the outlet is relatively small. Accordingly, in the present invention, when a combination of electrical conductive portions contacting the cooling water cooperatively exhibits a single function such as heat exchanging like in the heat exchanging plate described above, the electrical conductive portions are not required to be insulated from each other.

Conversely, when electrical conductive portions have different functions, respectively, in the case of the heat exchanger and the pump having different functions such as heat exchanging and circulating cooling water, the difference in electric potential between cooling water passing through the heat exchanger and the pump may have relatively high potential differences. Then an electrolytic battery may be created via the cooling medium if the cooling medium has the character of an electrolyte.

In the case of the outermost separator and the current collector in the fuel cell stack, although they have different shapes and are made of different materials, they have the same function, that is, to collect electricity. In such case, a portion where electric current is functionally conducted is required, which is also a feature of the present invention.

As described above, the feature of the technical concept of the fuel cell power generator in accordance with the present invention lies in the prevention of forming a conductive network due to cooling medium circulating throughout the fuel cell power generator comprising the fuel cell stack, the cooling medium path, the heat exchanger and the means for circulating cooling medium by electrically insulating the electrical conductive members constituting the fuel cell stack such as the cooling medium path, the heat exchanger and the means for circulating cooling medium from each other. In short, the feature is to prevent the formation of a conductive network among at least the fuel cell stack, the heat exchanger and the means for circulating cooling medium due to the cooling medium by electrically insulating their electrical conductive portions from each other.

It is preferred that an electrically insulating part is positioned at least at one portion of said cooling medium path. Specifically, it is preferred that the cooling water pipe is at least partly made of an insulating material.

It is further preferred that the fuel cell stack is physically attached to the fuel cell power generator by an electrically insulating material. That is the fuel cell stack is fixed to the cabinet of the fuel cell power generator by a member comprising an insulating material.

It is further preferred that the heat removing path (pipe) is connected to a hot water supplier or hot water storage tank.

It is further preferred that the fuel cell power generator further comprises an electric leakage prevention means for preventing an electric short between the fuel cell stack and the heat removing path. That is an electromotive force generated in the fuel cell stack is prevented from leaking to the heat removing pipe.

It is further preferred that the electric leakage prevention means is to provide an electric connection between said heat exchanging plate and the ground.

It is also preferred effective that the electric leakage prevention means is to provide an electric connection between said heat removing path and the ground.

In other words, the electric leakage prevention means may be, for example, to connect at least one of the heat exchanging plate and the heat removing pipe to the ground.

The present invention further provides a fuel cell power generator comprising: a fuel cell stack comprising a stack of unit cells, a pair of current collectors and a pair of end plates, each of the unit cells comprising a hydrogen ion conductive electrolyte, a pair of electrodes sandwiching the hydrogen ion conductive electrolyte and a pair of separators sandwiching the electrodes; a cooling medium (water) path (pipe) for circulating cooling medium which passes through the fuel cell stack; a heat exchanger having a heat removing path (pipe) connected thereto and a heat exchanging plate for recovering heat from the cooling medium having passed through the fuel cell stack; a means for circulating the cooling medium; and an interruption unit for interrupting a flow of the cooling medium is disposed in any portion of the cooling medium path.

The fuel cell power generator may include a plurality of the interruption units. Namely, it is effective that the interruption unit is settled at both inlet side and outlet side on the heat exchanger.

It is preferred that the interruption units are disposed on both inlet side and outlet side of the heat exchanger.

It is further preferred that at least one of the heat exchanging plate and the heat removing path is connected to the ground.

According to the fuel cell power generator of the present invention having the above described structure, it is possible to prevent the metal portions contacting the cooling water from corroding and the electroconductivity of the cooling water from increasing for a long period of time. Additionally, another method for preventing the corrosion of the heat exchanging plate in the heat exchanger is to form a section(s) on the cooling water pipe to interrupt the flow of the cooling water so as to effectively prevent the electric potential of the cooling water from being transmitted to the heat exchanging plate in the heat exchanger.

According to the present invention, it is possible to prevent an abrupt increase in the electroconductivity of the cooling water for a long period of time and the corrosion of the electrical conductive portions contacting the cooling water by electrically insulating the electrical conductive portions contacting the cooling water from each other and/or interrupting the flow of the cooling water. It is also possible to remarkably enhance the reliability of the fuel cell power generator.

From one practical aspect the invention may be summarized as follows: Theoretically is the open-circuit voltage, i.e. the voltage without output current, of a unit cell (or a single cell) of a fuel cell around 1.2V. In practice the actual open-circuit voltage is observed to be only about 1.0V. It is believed that the difference of 0.2V is caused by various accompanying chemical reactions or electrochemical reactions such as dissolvation of metal elements into cooling water. It has been made sure by experiment that the dissolvation of metal elements into cooling water indeed.

When electric power is taken from the fuel cell the output voltage goes down to around 0.8V when the output current is 200mA. This is caused by electric resistance of the component of the fuel cell on the one hand and the same bad reactions as above on the other hand.

When metal dissolution has occurred, the electric conductivity of a polymer electrolyte increases. This phenomena is one source of the decrease of the output power of a fuel cell.

For such and other reasons the dissolvation of metal elements into cooling water has to be stopped as complete as possible.

An elementary battery is already created if two metal electrodes with an intermediate electrolyte have different electrochemical potentials. Even this creates leaching of metal elements as ions into cooling water as cooling medium.

Still more significant is this effect of dissolvation of metal elements if into cooling water when the fuel cell is operated. When the electric power created by operation of the fuel cell itself results in dissolvation of metal elements even in the components of the fuel cell cogeneration system including the components of the fuel cell electric power generator.

It is one intention of the invention to interrupt the electrical connection between the fuel cell itself and other components of the fuel cell electric power generator along the path of the cooling medium. Thus the mentioned dissolvation of metal elements can be substantially stopped.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a diagram illustrating a structure of a fuel cell power generator according to a first embodiment of the present invention.

FIG. 2 is a diagram showing a structure of a stack 1S of a fuel cell 1 in FIG. 1 and an electric potential of each of the unit cells in the stack.

FIG. 3 is a diagram illustrating a structure of a fuel cell power generator according to a second embodiment of the present invention.

FIG. 4 is a diagram schematically showing a structure of an interruption unit 41A used in a second embodiment.

FIG. 5 is a graph comparatively showing the relation between - operation time and electric resistance of cooling water in fuel cell power generators of Examples and Comparative Example.

FIG. 6 is a diagram illustrating a structure of a conventional fuel cell power generator.

### DETAILED DESCRIPTION OF THE INVENTION

The present invention relates to a fuel cell power generator comprising: a fuel cell stack comprising a stack of unit cells, current collectors and end plates, each of the unit cells comprising a hydrogen ion conductive electrolyte, a pair of electrodes sandwiching the hydrogen ion conductive electrolyte and a pair of separators sandwiching the electrodes; a cooling water pipe for circulating cooling water which passes through the fuel cell stack; a heat exchanger having a heat removing pipe connected thereto and a heat exchanging plate for recovering heat from the cooling water having passed through the fuel cell stack; and a means for circulating the cooling water, which is characterized in that at least two electrical conductive portions contacting the cooling water selected from the group consisting of an electrical conductive portion of the fuel cell stack, an electrical conductive portion of the cooling water pipe, an electrical conductive portion of the heat exchanger, and an electrical conductive portion of the means for circulating the cooling water (e.g. of a pump) are electrically insulated or that the cooling water pipe has an interruption unit(s) for interrupting the flow of the cooling water.

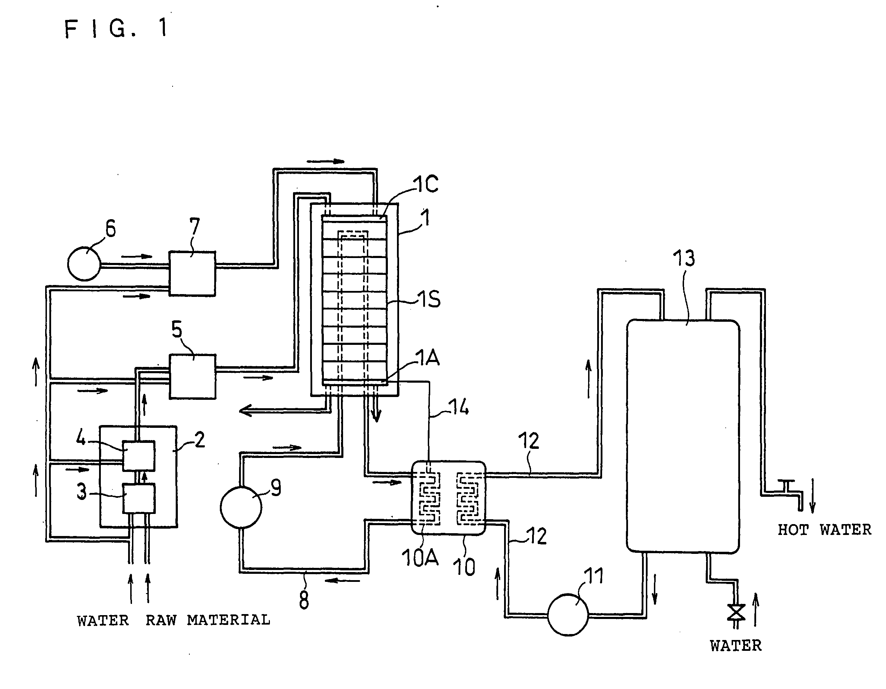

FIG. 1 shows the structure of a fuel cell power generator according to a first embodiment of the present invention.

The fuel cell power generator in accordance with the present invention comprises a fuel cell stack 1. The fuel cell stack 1 includes a stack of a plurality of unit cells 1S, current collectors and end plates disposed at both ends of the stack of unit cells 1S (hereinafter may be referred to as just "stack 1S"). Each of the unit cells comprises a hydrogen ion conductive electrolyte and a pair of electrodes sandwiching the hydrogen ion conductive electrolyte and a pair of electrical conductive separators sandwiching the electrodes. The fuel cell power generator in accordance with the present invention further comprises a cooling water pipe 8 for circulating cooling water which passes through the stack of unit cells 1S, a heat exchanger 10 for recovering waste heat from the cooling water having passed through the fuel cell stack 1 which has a heat removing pipe and a heat exchanging plate for transferring heat of the cooling water, and a pump 9 serving as the means for circulating the cooling water, and it is characterized by preventing a conductive network from occurring in the fuel cell power generator.

Once a conductive network is formed, the circulation of cooling water having a certain electroconductivity causes some of the metal portions in the fuel cell power generator to become noble and other to become base, resulting in the corrosion of the electrical conductive portions. The present invention is intended to effectively solve the above problem.

In the fuel cell power generator of the present invention, a fuel processor 2 first produces a fuel gas composed mainly of hydrogen from raw material such as natural gas. The produced fuel gas is then fed into the fuel cell stack 1 through a humidifier 5. The fuel processor 2 comprises a reformer 3 for producing a reformed gas and a carbon monoxide converter 4 for producing carbon dioxide and hydrogen through the reaction of carbon monoxide contained in the reformed gas with water.

Although the humidifier 5 and another humidifier 7 are located remote from the fuel cell stack 1 in FIG. 1, it is effective to place the humidifiers 5 and 7 adjacent to the fuel cell stack 1 and to utilize heat released from a heat removing pipe 12 of a heat exchanger 10, which will be described later, for operating the humidifiers. In some cases, the portion contacting the cooling water of the humidifiers may be deemed to be the electrical conductive portion of the present invention because cooling water passes through the humidifiers.

An air supplier 6 feeds an oxidant gas, i.e. air, to the fuel cell stack 1 through the humidifier 7. A pump 9 supplies cooling water for cooling down the fuel cell stack 1 to the fuel cell stack 1 through a cooling water pipe 8. The cooling water circulates throughout the stack 1S.

On the cooling water pipe 8 is located the heat exchanger 10. During power generation, in the heat exchanger 10, waste heat of cooling water having passed through the fuel cell stack 1 is transferred through a heat exchanging plate in the heat exchanger 10 to cooling water pumped by a circulating pump 11, which is then transported through a heat removing pipe 12 to a storage tank 13. In the fuel cell stack 1, cooling water is circulated throughout the inside of the stack 1S to enhance cooling efficiency. The storage tank may be a hot water supplier or hot water storage tank without influence on the present invention.

The heat exchanger 10 comprises the cooling water pipe 8 and the heat exchanging plate 10A connected thereto. The heat exchanging plate 10A is made of metal highly effective in heat exchanging. The cooling water pipe 8 is made of an electrical insulating material with heat resistance such as resin or ceramic.

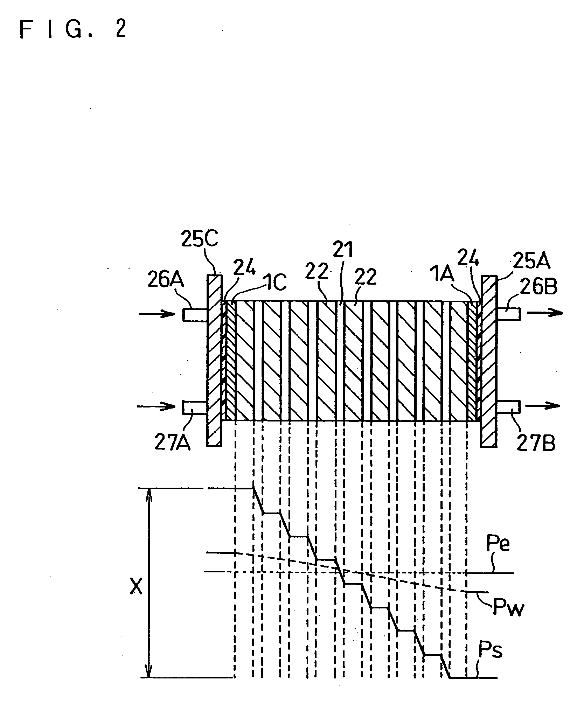

FIG. 2 shows the structure of the stack 1S in the fuel cell stack 1 illustrated in FIG. 1 and an electric potential of each of the unit cells in the stack 1S.

In the power generating portion of the stack 1S in the fuel cell stack 1, membrane electrolyte assemblies (MEAs) 21, each comprising a polymer electrolyte membrane and a pair of gas diffusion electrodes sandwiching the polymer electrolyte membrane, are stacked alternately with conductive separator plates 22 to form a stack. At the ends of the stack are disposed a set of a current collector plate 1C and an end plate 25C with an insulating plate 24 interposed therebetween and another set of a current collector plate 1A and an end plate 25A with an insulating plate 24 interposed therebetween.

The end plates 25A and 25C are fastened with insulating bolts and nuts, which are not shown in the figure. The unit cells are electrically connected with each other in series by the conductive separator plates 22. This makes it possible to prevent the gases or cooling water from leaking from any contact portion between the membrane electrolyte assembly 21 and the separator plate 22.

The end plate 25C disposed at the positive electrode (oxidant electrode) side has an oxidant gas inlet 26 A and a cooling water inlet 27A. The end plate 25A disposed at the negative electrode (fuel electrode) side has a fuel gas outlet 26B and a cooling water outlet 27B. Although only the inlet for oxidant gas and the outlet for fuel gas are shown in FIG. 2, in practice, an inlet and an outlet for fuel gas and an inlet and an outlet for oxidant gas are provided. In the structure of the present invention, the end plates 25A and 25C can be made of stainless steel which is easily moldable and inexpensive.

The separator plates 22, except those that are disposed at the ends of the stack 1S in the fuel cell stack 1, have a gas flow channel for supplying oxidant gas to one gas diffusion electrode (positive electrode) on one surface thereof and another gas flow channel for supplying fuel gas to the other gas diffusion electrode (negative electrode) on the other surface thereof. The separator plate 22 that is disposed at every, for example, two unit cells has a cooling water flow channel for cooling down each of the unit cells formed thereon.

Cooling water enters from the cooling water inlet 27A into the stack 1S, passes through the separator plates that are disposed at every two unit cells to cool down the stack 1S and then exits from the outlet 27B into the heat exchanger 10. In the heat exchanger 10, the cooling water is cooled down by heat exchanging, which is again sent to the stack 1S. In the cooling water circulation system composed mainly of the cooling water pipe 8 like this, the cooling water contacts the metal portions of the end plates 25A and 25C, as well as those of the heat exchanging plate 110A.

In the case of using pure water as the cooling water like antifreeze solution, pure water initially has a low electroconductivity, but its electroconductivity gradually increases due to impurities from the opening (not shown in the figure) of the cooling water system and those leaching from the materials constituting the cooling water circulation system.

The lower part of FIG. 2 schematically shows the electric potential of each of the separators corresponding to the position of the elements constituting the stack 1S. The electric potential of the stack (separators) is represented by "Ps", and that of the cooling water is represented by "Pe" and "Pw". The "Pe" represents the electric potential of the cooling water during shutdown of the fuel cell (i.e. when the stack does not have an electromotive force) or that when the cooling water has an extremely high conductivity due to ion contamination. The "Pw" represents the electric potential of the cooling water when the cooling water is slightly contaminated by leached ions (i.e. when the contamination is prevented by the present invention).

Between the current collector plates 1A and 1C exists an electric potential difference of several ten V or more, which varies depending on the number of the unit cells. The electric potential of the cooling water passing throughout the inside of the stack 1S is controlled by this electric potential.

Accordingly, in the cooling water, a large electric potential difference as shown by X in FIG. 2 occurs. It is, in other words, a difference between the highest electric potential and the lowest electric potential. The cooling water present within the cooling water pipe 8 connecting the pump 9, the stack 1S and the heat exchanger 10 has an electric potential corresponding to the distance from two points of the inlet 27A and the outlet 27B.

The metal portions contacting the cooling water have an electric potential corresponding to the cooling water that contacts the metal portions. If an electric current is conducted between such metal portions, the electric potentials of the metal portions will be equal. Accordingly, an electric potential higher than that of the cooling water occurs in one metal portion, and an electric potential lower than that of the cooling water occurs in the other metal portion.

When the electroconductivity of the cooling water increases, metal ions leach from the metal portion having an electric potential higher than that of the cooling water into cooling water, as described earlier. As a result, the ion conductivity of the cooling water further increases, which accelerates the corrosion of the metal portions.

In one embodiment of the present invention, the metal portions contacting the cooling water in the cooling system are insulated from each other to prevent the occurrence of a significant electric potential difference between the metal portion and the cooling water and thus the corrosion of the metal portions. For this reason, the cooling water pipe 8 connecting the heat exchanging plate 10A, the stack 1S and the pump 9 is made of an insulating material such as resin or ceramic.

The stack 1S is sandwiched between the end plates 25A and 25C, which are fastened with insulating bolts and nuts. The bolts and nuts are made of ceramic. They may be made of metal if a member made of an insulating material such as heat-resistant resin, heat-resistant rubber or ceramic is placed between the end plate 25A and the bolt and nut and between the end plate 25C and the bolt and nut.

Moreover, the stack 1S of the fuel cell stack 1 is preferably housed in a case (cf. difference of 1 and 1S and 101 and 101S in the figures) with an insulating material placed between the end plate 25A and the case and between the end plate 25C and the case to prevent the end plate and the case from being electrically connected with each other.

With the structure as described above, the metal portions in the fuel cell power generator, namely, the end plates 25A and 25C as well as the heat exchanging plate 10A, can be electrically insulated. This effectively prevents the acceleration of the corrosion of the metal portions resulting from the electric potential difference.

Connecting the heat exchanging plate 10A of the heat exchanger 10 to the ground prevents the transmission of electric potential of the cooling water to the hot water system side, and thus prevents the heat removing pipe 12 from corroding. In this case, both the positive electrode (oxidant electrode) and the negative electrode (fuel electrode) in the fuel cell stack 1 should not be connected to the ground. Additionally, the effect of preventing the corrosion can be further enhanced by connecting the heat removing pipe 12 to the ground.

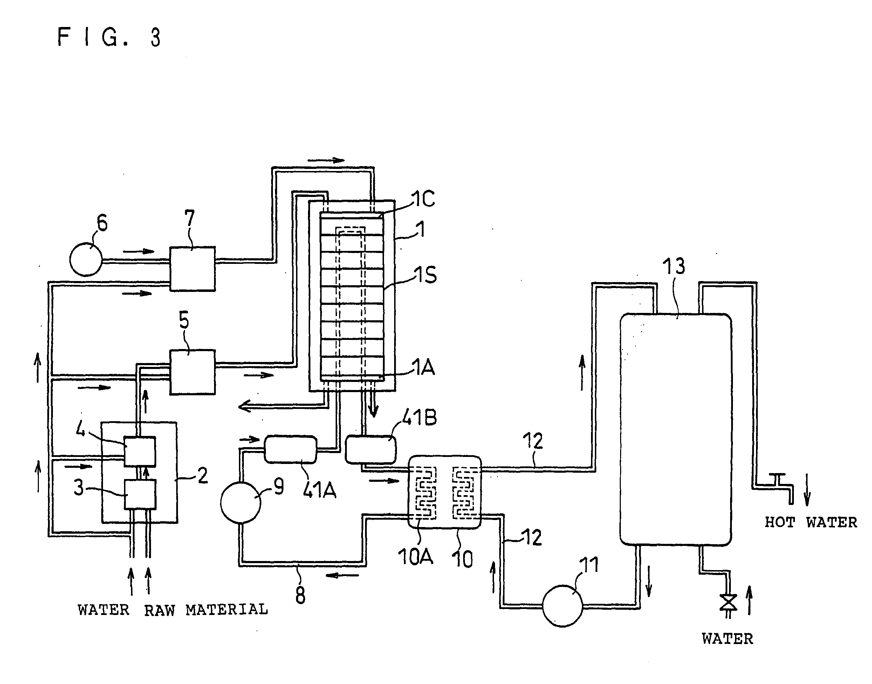

The fuel cell power generator according to the second embodiment of the present invention is now described. FIG. 3 shows the structure of the fuel cell power generator according to the second embodiment of the present invention. This fuel cell power generator comprises a fuel cell stack 1, a cooling water pipe 8, a heat exchanger 10, a pump 9, similar to the fuel cell power generator according to the first embodiment shown in FIG. 1, and further an interruption unit for interrupting the flow of cooling water in the fuel cell power generator, and it is characterized by breaking a conductive network due to cooling water.

The fuel cell power generator according to the second embodiment of the present invention has a structure almost analogous to that of the fuel cell power generator according to the first embodiment. As seen from FIG. 3, the feature thereof lies in the fact that interruption units 41A and/or 41B for interrupting the flow of cooling water are disposed on the cooling water pipe 8 between the fuel cell stack 1 and the heat exchanger 10 and/or between the pump 9 and the fuel cell stack 1. In the figure, two interruption units are provided, but only one interruption unit will do. The effect increases with increasing number of the interruption units.

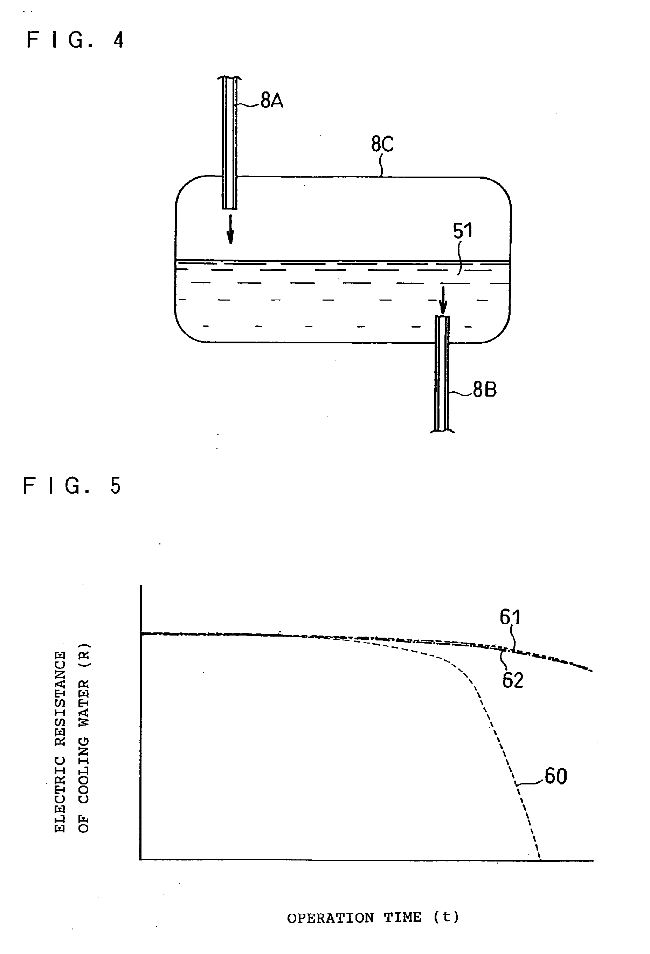

FIG. 4 schematically shows the interruption unit 41A used in this embodiment of the present invention. The interruption unit 41B also has the same structure. As shown in FIG. 4, the interruption unit 41 comprises a container 8C, an inlet pipe 8A and an outlet pipe 8B both of which are connected to the container 8C. The inlet pipe 8A is connected to the upper part of the container 8C and the outlet pipe 8B is connected to the lower part of the container 8C. The effect of the present invention can be enhanced by shaping the interruption unit into a siphon and allowing it to have the siphon function.

As shown in FIG. 3, the cooling water pumped out by the pump 9 is sent to the inlet pipe 8A of the interruption unit 41A and then to the container 8C thereof, which is discharged from the outlet pipe 8B into the fuel cell stack 1. The opening of the inlet pipe 8A is formed in the upper part of the container 8C which is situated above the surface of cooling water 51. The flow of the cooling water is interrupted here. The container 8C of the interruption unit 41A is hermetically sealed.

By locating the interruption unit(s) 41A and/or 41B having the structure described above on the cooling water pipe 8 between the fuel cell stack 1 and the heat exchanger and/or between the pump 9 and the fuel cell stack 1, an electrical connection (i.e. conductive network) among the fuel cell stack 1, the heat exchanger 10 and the pump 9 due to the flow of the cooling water is interrupted. This avoids the creation of the electric potential difference between the heat exchanging plate 10A and the cooling water resulting from the electric potential of the fuel cell stack 1, thus preventing the heat exchanging plate 10 from corroding. With the use of this structure, the inlet pipe 8A and the outlet pipe 8B can be made of inexpensive metal.

In the case where the cooling water pipe 8 connecting the heat exchanger 10 and the fuel cell stack 1 is long, the placement of only the interruption unit 41A between the pump 9 and the fuel cell stack 1 may not prevent all the effect of the electric potential. This phenomenon can be avoided by disposing the interruption unit 41B on the cooling water pipe 8 between the heat exchanger 10 and the fuel cell stack 1 as well as the interruption unit 41A between the pump 9 and the fuel cell stack 1. Although not show in the figure, the connection of the heat exchanging plate 10A to the ground offers the same effect as the first embodiment.

Each of the unit cells constituting the above-described fuel cell stack 1 comprises a pair of gas diffusion electrodes, each composed of a gas diffusion layer and a catalyst reaction layer, and a polymer electrolyte membrane sandwiched therebetween. The gas diffusion layer can be made of carbon paper, carbon cloth produced by weaving a flexible material such as carbon fiber, or carbon felt formed by adding an organic binder to a mixture of carbon fiber and carbon powder.

The present invention is specifically explained below using examples, but it is to be understood that the present invention is not limited to them.

### EXAMPLES 1, 2 and COMPARATIVE EXAMPLE

A fuel cell power generator 1 having the structure shown in FIG. 1 (EXAMPLE 1), a fuel cell power generator 2 having the structure shown in FIG. 3 (EXAMPLE 2) and a fuel cell power generator for comparison having the structure shown in FIG. 6 (COMPARATIVE EXAMPLE) were produced here.

First, the unit cells of a fuel cell stack 1 were produced. A platinum catalyst was supported on the surface of a carbon powder (DENKA BLACK FX-35, manufactured by Denki Kagaku Kogyo Kabushiki Kaisha) to give a catalyst body with 50 wt% of platinum. The catalyst body was dispersed in an alcohol solution (Flemion FSS-1, manufactured by Asahi Glass Co., Ltd.) of a polymer electrolyte to give a slurry.

A piece of carbon paper (TGP-H-090, manufactured by Toray Industries, Inc.) with a thickness of 200 µm was immersed in an aqueous dispersion of polytetrafluoroethylene (PTFE), which was dried and subjected to heat treatment to give a gas diffusion layer with water repellency.

The slurry was applied to one face of the gas diffusion layer, which was dried to give a gas diffusion electrode comprising an electrode reaction layer and the gas diffusion layer. The amount of platinum per unit area of the gas diffusion electrode was 0.5 g. In the above manner, two gas diffusion electrodes were produced.

Then, a polymer electrolyte membrane (NAFION 112, manufactured by E.I. Du Pont de Nemours & Co. Inc. of the USA) was sandwiched between a pair of the gas diffusion electrodes such that the electrode reaction layers of the gas diffusion electrodes face inward toward each other, which was hot- pressed at a temperature of 110°C under a pressure of 2.5 MPa for 30 seconds to give a membrane electrolyte assembly (MEA). The gas diffusion electrode had an area (i.e. electrode area) of 25 cm².

Meanwhile, carbon powders were cold-pressed to form a plate. The plate was impregnated with phenol resin, which was cured to give a resin-impregnated plate having an improved gas sealing property. The surface of this plate was etched to form a gas channel thereon to give a conductive separator. Then, manifold apertures for supplying and removing the fuel gas, those for supplying and removing the oxidant gas, and those for supplying and removing the cooling water were formed on the periphery of the gas channel of the separator. Subsequently, the stack 1S of the fuel cell stack 1 having the structure shown in FIG. 2 was produced. A gasket made of silicon rubber as the gas sealant was placed around the MEA produced above, and the separator 22 was then placed thereon. In this manner, ten MEAs were stacked with separators 22 interposed therebetween. The separators that were disposed at every two MEAs had a cooling water flow channel. Thereby, a stack of unit cells was obtained.

At both ends of the thus-produced stack were disposed the current collectors 1C and 1A, each obtained by plating a plate made of copper with gold, the insulating plates 24 and the end plates 25A and 25C made of stainless steel in this order, which was then fixed at a pressure of 20 kgf/cm² to give a fuel cell stack. Each of the current collectors also had manifold apertures for the fuel gas, those for the oxidant gas and those for the cooling water formed thereon.

The end plates 25A and 25C were fastened with insulating bolts and nuts, which are not shown in the figure. The unit cells were electrically connected with each other in series by the conductive separator plates 22. Thereby, the contact portion between the elements such as the membrane electrolyte assembly 21 and the separator 22 was completely sealed.

The reactant gas inlet 26A and the cooling water inlet 27A were formed in the end plate 25C and the reactant gas outlet 26B and the cooling water outlet 27B were formed in the end plate 25B such that they respectively corresponded to the manifold apertures described above. Although FIG. 2 shows only one inlet for reactant gas (oxidant gas) and one outlet for reactant gas (fuel gas), in practice, an inlet and an outlet for fuel gas and an inlet and an outlet for oxidant gas were provided.

In the fuel cell stack 1 thus produced, the manifold aperture for fuel gas was connected to the fuel processor 2 with the humidifier 5 placed therebetween, and the manifold aperture for oxidant gas was connected to the air supplier 6 with the humidifier 7 placed therebetween. The manifold apertures for cooling water of the stack 1S were connected to the cooling water pipe 8 connecting the heat exchanger 10 and the pump 9.

The cooling water pipe 8 used here was a pipe made of resin (i.e. electrical insulating material). This prevented a conductive network due to the cooling water from occurring among the fuel cell, the heat exchanger and the pump. Thereby, the fuel cell power generator 1 having the structure shown in FIG. 1 was completed (EXAMPLE 1).

As the second embodiment of the present invention (EXAMPLE 2), a fuel cell power generator 2 having the structure shown in FIG. 3 was produced in the same manner as the fuel cell power generator 1 was produced except that interruption units 41A and 41B for interrupting the flow of the cooling water, each having the structure shown in FIG. 4, were respectively located on the cooling water pipe 8 between the fuel cell stack 1 and the heat exchanger 10 and between the pump 9 and the fuel cell stack 1.

For comparison (COMPARATIVE EXAMPLE), a fuel cell power generator for comparison having a conventional structure shown in FIG. 6 was produced.

### EVALUATION

The fuel cell power generators produced above were evaluated in terms of corrosion of the metal portions during operation. A gas supplying system for supplying the gases, a power output system for setting and adjusting a load current to be drawn from the cell, and a heat adjusting system for adjusting the cell temperature and efficient use of waste heat were joined with each of the above produced fuel cell power generators, which was then continuously operated for the evaluation.

The current density in each unit cell was set to 0.3 A/cm². As for the gas utilization rate, which indicates how much gas was used for electrode reaction relative to the gas supplied, the gas utilization rate for the fuel electrode was set to 70% and that for the oxidant electrode was set to 40%.

The power generation of the fuel cell is determined by the chemical formula: H₂ + 1/2O₂ →H₂O. If all the H₂ introduced causes the above reaction, the utilization rate would be 100%. In practice, however, approximately 30% of the H₂ introduced is left unreacted due to various reasons. In other words, that percentage of the H₂ remains intact and is then discharged.

The cell temperature was set to 75°C. As for the reactant gases, pure hydrogen was supplied as the fuel gas, and air was supplied as the oxidant gas. As for the supply pressure of the reactant gases, the supply pressure of air was set to 0.2 kgf/cm², and that of hydrogen was set to 0.05 kgf/cm². The outlets were open to the air.

Pure water was used as the cooling water. During continuous operation of each of the fuel cell power generators, changes in cell performance and electroconductivity (i.e. electrical resistance) of the cooling water were continuously monitored. FIG. 5 shows a comparative graph of the operation time verses the electrical resistance of the cooling water of the fuel cell power generators of EXAMPLES 1 and 2 and COMPARATIVE EXAMPLE, which are respectively represented by the numerals 61, 62 and 63. The horizontal axis represents the operation time (t), and the vertical axis represents the electrical resistance of cooling water (R). The units are omitted in FIG. 5 because it is a comparative graph.

As evident from FIG. 5, the electroconductivity of the cooling water of the fuel cell power generators in accordance with the present invention was maintained at a low level for a longer period of time than that of the conventional fuel cell power generator.

According to the present invention, it is possible to prevent an abrupt increase in the electroconductivity of the cooling water for a long period of time and the corrosion of the electrical conductive portions contacting the cooling water by electrically insulating the electrical conductive portions contacting the cooling water from each other and interrupting the flow of the cooling water. Accordingly, the fuel cell power generator in accordance with the present invention is suitable for use in home cogeneration systems, power generators for vehicles, etc.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A fuel cell electric power generator comprising:
a fuel cell stack comprising a stack of unit cells, a pair of current collectors and a pair of end plates, each of said unit cells comprising a hydrogen ion conductive electrolyte membrane, a pair of electrodes sandwiching said hydrogen ion conductive electrolyte membrane and a pair of separators sandwiching said electrodes;
a cooling medium path for circulating a cooling medium passing through said fuel cell stack,
said cooling medium path further passing a heat exchanger for exchanging heat between said cooling medium and a secondary medium,
said cooling medium path being provided with a means for circulating said cooling medium;
**characterized by** means for preventing creation of electrolytical battery effects between different portions of said cooling medium path and/or means for preventing transport of ions along said cooling medium path in the neighborhood of said heat exchanger.

2. The fuel cell electric power generator in accordance with claim 1, wherein said cooling medium is an essentially not electrically conducting cooling medium.

3. The fuel cell electric power generator in accordance with claim 1 or 2, wherein the means for preventing creation of electrolytical battery effects are insulating means between different electrically conducting portions of the fuel cell and/or the power generator system.

4. The fuel cell electric power generator in accordance with claim 3, wherein the different electrically conducting portions of the fuel cell are selected from the group including said fuel cell stack, said heat exchanger and said circulating means.

5. The fuel cell electric power generator in accordance with claim 4, wherein said electrically conductive portions comprise said separators, said current collectors and/or said end plates of said fuel cell stack and/or the heat exchange means of said heat exchanger.

6. The fuel cell electric power generator in accordance with one of claims 3 to 5, wherein the insulated different electrically conducting portions comprise base metals.

7. The fuel cell electric power generator in accordance with one for claims 1 to 6, wherein means for preventing creation of electrolytical battery effects comprise manufacturing of at least portions of the said cooling medium path from electrically insulating material.

8. The fuel cell electric power generator in accordance with claim 7, wherein said portions comprise the walls of a pipe means connected to the fuel cell stack.

9. The fuel cell electric power generator in accordance with one for claims 1 to 8, wherein said fuel cell stack is electrically insulated from a support means.

10. The fuel cell electric power generator in accordance with claim 1, further comprising an electric leakage prevention means for preventing an electric short circuit between said fuel cell stack and a path of said secondary medium.

11. The fuel cell electric power generator in accordance with claim 10, wherein said electric leakage prevention means is to provide for an electric connection between said heat exchanging means of said heat exchanger and the ground.

12. The fuel cell electric power generator in accordance with claim 10, wherein said electric leakage prevention means is to provide for an electric connection between said path of said secondary medium and the ground.

13. A fuel cell electric power generator in accordance with one of claims 1 to 12, wherein said means for preventing transport of ions is adapted for interrupting coherence of the stream cooling medium within its path.

14. The fuel cell electric power generator in accordance with claim 13, wherein said means for preventing transport of ions is provided at or on the inlet and/or the outlet of said heat exchanger for said cooling medium.
